# EUROPÄISCHE PATENTSCHRIFT

(11) **EP 1 846 690 B1**
(45) Veröffentlichungstag und Bekanntmachung des Hinweises auf die Patenterteilung: **13.04.2011**
(21) Anmeldenummer: 06706470.9
(22) Anmeldetag: 28.01.2006
(51) Int. Cl.: F17C 5/00, F17C 6/00, F04B 15/08, F02B 43/00, B60K 15/03

(54) **MIT KRYOGEN GESPEICHERTEM KRAFTSTOFF BETREIBBARES KRAFTFAHRZEUG MIT DRUCKLUFTANLAGE**
MOTOR VEHICLE THAT CAN BE DRIVEN BY CRYOGENICALLY STORED FUEL, COMPRISING A COMPRESSED AIR SYSTEM
VEHICULE AUTOMOBILE FONCTIONNANT AVEC DU CARBURANT STOCKE CRYOGENIQUEMENT ET MUNI D'UN SYSTEME A AIR COMPRIME

(30) Priorität: 10.02.2005 DE 102005005941
(43) Veröffentlichungstag der Anmeldung: 24.10.2007
(73) Patentinhaber: Bayerische Motoren Werke Aktiengesellschaft, 80809 München (DE)
(72) Erfinder: ROTH, Lothaire, 82140 Olching (DE)
(86) Internationale Anmeldenummer: PCT/EP2006/000756
(87) Internationale Veröffentlichungsnummer: WO 2006/084593

(56) Entgegenhaltungen:
- GB-A- 1 327 491
- US-A- 4 932 214
- US-A- 5 787 940
- US-A- 5 884 488
- US-A- 6 142 191
- US-A1- 2003 221 433
- US-B1- 6 182 715

## Beschreibung

Die Erfindung betrifft ein mit kryogen gespeichertem Kraftstoff betreibbares Kraftfahrzeug mit einer Entnahmeeinrichtung für kondensiertes Gas aus einem Behälter, insbesondere aus einem Kryotank, nach dem Oberbegriff des ersten Anspruchs.

Es ist bereits bekannt, Kraftfahrzeuge zum Beispiel mit Wasserstoff oder Erdgas anzutreiben und diesen Treibstoff als kondensiertes Gas in einem Behälter im Kraftfahrzeug zu speichern. Zu dieser verflüssigten Speicherung sind spezielle druckfeste Behälter notwendig, die aufgrund der tiefen Speichertemperaturen eine sehr gute Isolation besitzen sollten. Dabei ist bekannt, zur Vermeidung von Wärmeeintrag aus der Umgebung, doppelwandige, vakuumisolierte Behälter zu verwenden.

So erfolgt die Speicherung von zum Beispiel Wasserstoff in mobilen Fahrzeugen häufig in Form von tiefkaltem, verflüssigtem Wasserstoff, als kondensiertes Gas. Da in diesem Zustand infolge der hohen Energiedichte (gegenüber einer Speicherung von warmem, komprimiertem Wasserstoff-Gas) eine für Fahrzeuge vorteilhafte hohe Reichweite erzielt werden kann.

Der tiefkalte, flüssige Wasserstoffvorrat wird im Fahrzeug im siedenden Zustand in einem thermisch sehr gut isolierten, druckdichten Behälter gespeichert. Die Energiedichte des siedenden Wasserstoffs wird dabei durch Lagerung bei einer Temperatur wenig über der Siedetemperatur bei Umgebungsdruck, ca. 20 K, maximal. In den heute technisch umgesetzten Vorratsbehältern liegt der Wasserstoff typischerweise bei Temperaturen von ca. 21 K bis ca. 27 K und den damit korrespondierenden Siededrücken von ca. 2 bar (abs.) bis ca. 5 bar (abs.) vor.

Im unteren Teil des Vorratsbehälters liegt der siedende Wasserstoff als massedichtere flüssige Phase (wird im folgenden auch LH2 genannt) und darüber liegend als gasförmige Phase (wird im folgenden auch GH2 genannt) vor.

Die unmittelbare Förderung des Wasserstoffs (wird im folgenden auch H2 genannt) aus dem Vorratsbehälter in eine Vorlaufleitung hin zu einem Konditionierer oder Verbraucher erfolgt im einfachsten Fall über das zwischen Tankinnerem und der Umgebung anliegende statische Druckgefälle oder durch eine gezielte Bedruckung des Vorratsbehälters. Dabei besteht grundsätzlich die Möglichkeit durch die geometrische Gestaltung der im Tankinneren beginnenden Vorlaufleitung, vorrangig LH2 oder nur GH2 zu fördern.

Aus einem solchen Kryotank wird siedend gespeichertes H2 im allgemeinen aus der Gasphase als GH2 entnommen. Sofern H2 als LH2 aus der Flüssigphase entnommen wird, sind bei einer mobilen Anwendung die nachfolgenden Konditionierer, z.B. Druckerhöher, oder die Betriebsart eines Verbrauchers dennoch für die Förderung von GH2 ausgelegt. Dies ist erforderlich_{;} da infolge der möglichen Abweichungen von der Normallage des mobilen Behälters oder dynamischer, beschleunigter Zustände die Zulauföffnung einer Entnahmeleitung für LH2 systematisch auch bei hohen Füllständen von Gasphase zeitweilig umspült sein kann. Dies ist im zeitlichen Verlauf der Entleerung des mobilen Behälters insbesondere lange vor dem Zeitpunkt möglich, vor dem die Gasphase in einem identischen immobilen Behälter die Zulauföffnung der LH2-Entnahmeleitung durch reine Entnahme erreicht. Aus diesem Grund wird bei mobilen Anwendungen H2 vorwiegend aus der Gasphase entnommen.

Dem Vorratsbehälter wird während der H2-Entnahme Wärme zugeführt, die zum Abdampfen von LH2 im Behälter und damit zur Aufrechterhaltung eines für die Förderung erforderlichen Behälterdruckes führt, der sonst durch die Entnahme soweit sinken würde, dass eine Förderung nicht mehr möglich wäre. Diese zur Druckhaltung benötigte Wärmezufuhr erfolgt über eine separate Heizung, die z. B. als elektrisch betriebenes Heizelement ausgeführt sein kann oder z.B. direkt durch Zufuhr von erwärmtem, gasförmigem H2, das einem erwärmten Vorlaufstrom gezielt abgezweigt und in den Innenbehälter (zurück-) geleitet wird.

Mobile Vorratsbehälter besitzen nach derzeitigem Stand eine Entnahmeeinrichtung für den kryogen gespeicherten Kraftstoff, die mindestens aus einer Entnahmeleitung mit einem tanknah untergebrachten Absperrventil besteht. In den meisten Fällen besitzt die Entnahmeeinrichtung jedoch mindestens zwei Entnahmeleitungen mit mindestens je einem Absperrventil, eine erste Entnahmeleitung für die Entnahme von kondensiertem Gas (LH2) und eine zweite Entnahmeleitung für die Entnahme von Gas (GH2).

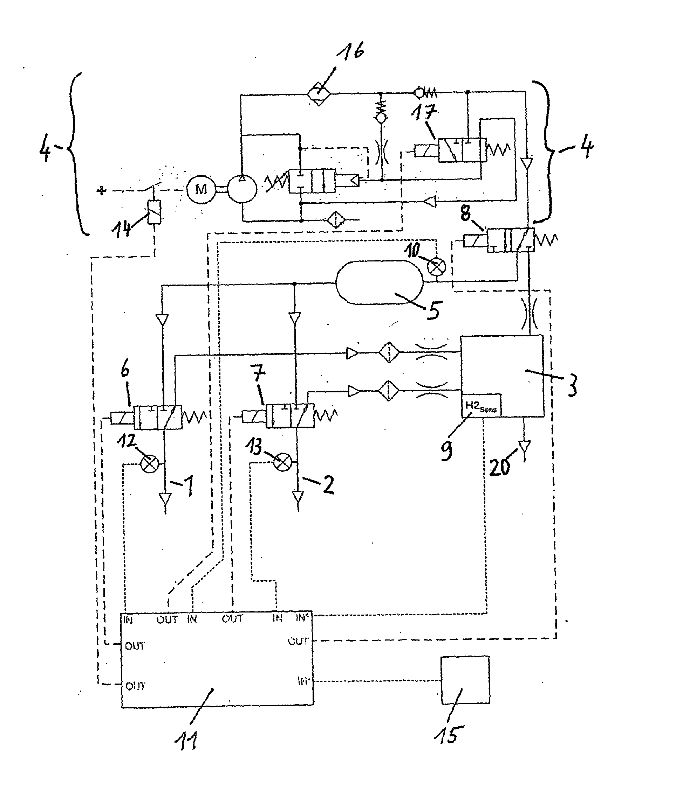

Die DE 37 41 145 C2 beschreibt ein Entnahmesystem für Flüssigwasserstoff mit einer außerhalb eines Speichertanks angeordneten Fördereinheit, die über eine Saugleitung mit dem Speichertank verbunden ist. Diesseits der Fördereinheit ist in der Saugleitung ein tankseitiges Absperrventil vorgesehen und jenseits der Fördereinheit ist in der Zuleitung zur Brennkraftmaschine ein motorseitiges Absperrventil vorgesehen. Beide Absperrventile werden über eine Anlaufsteuerung der Förderpumpe gesteuert und sind in der Zeichnung als elektrisch betätigte Magnetventile dargestellt.

Das hat den Nachteil, dass bei einer Undichtigkeit im Bereich der Fördereinheit und der Absperrventile Wasserstoff in die Umgebung austreten und dort zusammen mit Luft ein explosionsfähiges Gemisch entstehen kann, was eine Überwachung der Wasserstoff führenden Komponenten durch Sensoren nötig macht, um rechtzeitig für eine Belüftung sorgen zu können. Dabei ist es durchaus nicht einfach im Kryogenspeicherbereich Undichtigkeiten bei elektrisch betätigten Ventilen zu vermeiden, aufgrund einer wegen Auslegungsgrenzen im Fahrzeugeinsatz nur begrenzt zur Verfügung stehenden elektromagnetischen Kraft.

Aufgabe der vorliegenden Erfindung ist es, für die genannten Nachteile Abhilfemaßnahmen aufzuzeigen. Vorteilhafte Aus- und Weiterbildungen sind Inhalt der Unteransprüche.

Nach der Erfindung ist ein Kraftfahrzeug mit einem mit kryogen gespeichertem Kraftstoff betreibbaren Verbraucher, insbesondere einer Brennkraftmaschine, und mit einem Behälter, insbesondere einem Kryotank, zur Speicherung des Kraftstoffs als kondensiertes Gas, wobei der Behälter eine Entnahmeeinrichtung für den kryogen gespeicherten Kraftstoff besitzt, die mindestens aus einer Entnahmeleitung mit einem Absperrventil besteht, dadurch gekennzeichnet, dass das Absperrventil mittels Druckluft betätigt wird.

Das hat den Vorteil, dass hohe Ventilanpresskräfte realisiert werden können, die zum Beispiel größer als 1000 Newton sind, um im kryogenen Bereich die Dichtheit zu verbessern. Die Ventilanpresskräfte werden durch steife Federn erzeugt, die pneumatisch gelöst werden können. Diese großen Anpresskräfte am Ventilsitz reduzieren vorteilhafterweise auch die Schmutz- und Partikelempfindlichkeit des Absperrventils, was wiederum zur Folge hat, dass für Partikel im ikrometer-Bereich keine Filter eingebaut werden müssen. Dies reduziert die Druckverluste im Tanksystem, was zum Beispiel Betankungszeiten verkürzt, die Reichweite vergrößert etc.

Bei einer bevorzugten Ausführung der Erfindung weist die Entnahmeeinrichtung mindestens zwei Entnahmeleitungen mit mindestens je einem Absperrventil auf, eine erste Entnahmeleitung für die Entnahme von kondensiertem Gas und eine zweite Entnahmeleitung für die Entnahme von Gas. Das hat den Vorteil, dass die Versorgung des Verbrauchers mit Gas zuverlässig sichergestellt ist.

Bei einer weiteren bevorzugten Ausführung der Erfindung dient die Entnahmeeinrichtung auch als Befülleinrichtung für kryogen gespeicherten Kraftstoff. Das hat den Vorteil, dass eine separat ausgebildete Befülleinrichtung entfallen kann.

Wenn die Druckluft zur Betätigung der Absperrventile mittels einer kraftfahrzeugeigenen Druckluftanlage erzeugt wird, steht immer genügend Druckluft zur Verfügung. Außerdem kann diese dann auch noch für andere Zwecke verwendet werden, oder eine sowieso vorhandene Druckluftanlage wird zusätzlich noch zur Betätigung der Absperrventile eingesetzt. Dies ist vorteilhafterweise preiswert und ohne großen Aufwand technisch zu verwirklichen.

Des weiteren sind bei einer vorteilhaften Ausführungsform im oder in der Nähe des Behälters bestimmte abgeschlossene Bereiche ausgebildet, insbesondere eine Nebensystemkapsel, die über eine Einrichtung zu deren Spülung mit Druckluft verfügen.

Auf diese Weise können Bereiche oder Elemente, wie zum Beispiel die Absperrventile, in oder an denen sich Leckagen bilden können, durch abgeschlossene, von der Umgebung getrennte Unterbringung über ein Spülsystem mit Druckluft gespült werden, wenn Sensoren im abgeschlossenen Bereich eine erhöhte Gaskonzentration ermitteln. Die Druckluft zum Spülen der abgeschlossenen Bereiche kann dann ebenfalls mittels der kraftfahrzeugeigenen Druckluftanlage erzeugt werden. Zusätzlich kann zum Spülen auch die Abluft aus den Absperrventilaktuatoren verwendet werden, die entsteht, wenn die Absperrventile geschlossen werden.

Bei einer weiteren vorteilhaften Ausführung der Erfindung besitzt die Druckluftanlage eine Druckluftversorgungssteuerung, die alternativ, entweder die abgeschlossenen Bereiche spült oder die Absperrventile betätigt.

Das hat den Vorteil, dass beide Funktionen, die Spülung gasangereicherter Zonen und die Ansteuerung der Absperrventile, mit einem System durchgeführt werden können, was eine Reduzierung von Kosten mit sich bringt.

Im folgenden wird die Erfindung anhand eines bevorzugten Ausführungsbeispiels weiter erläutert. Die einzige Figur zeigt einen Pneumatik- und Elektroschaltplan einer Einrichtung zur Spülung gasangereicherter Zonen und zur Ansteuerung von Absperrventilen einer Anlage zur Speicherung von kondensiertem Gas eines Kraftfahrzeugs gemäß der Erfindung. Die durchgezogenen Linien sind dabei Pneumatikleitungen, während die gestrichelten Linen die elektrische Steuerung darstellen.

In einem nicht gezeichneten Kraftfahrzeug ist ein nicht gezeichneter Kryotank zur Speicherung von Flüssigwasserstoff eingebaut. Dieser dient als Kraftstoff zur Versorgung einer das Kraftfahrzeug antreibenden, nicht gezeichneten, Brennkraftmaschine. Der Wasserstoff liegt im Kryotank in zwei Aggregatzuständen vor, im oberen Teil als gasförmiger Wasserstoff und im unteren Teil als kondensiertes Gas in flüssiger Form. Eine Entnahmeeinrichtung für Wasserstoff, sowohl aus der flüssigen Phase LH2 als auch gasförmig GH2 ist in den Kryotank eingebaut, diese versorgt über zwei nicht gezeichnete Entnahmeleitungen, eine für die Entnahme von kondensiertem Gas LH2 und eine für die Entnahme von Gas GH2, die Brennkraftmaschine mit Wasserstoff.

Jede der Entnahmeleitungen ist tanknah mit einem nicht gezeichneten pneumatisch betätigbaren Absperrventil versehen, das mittels Druckluft aus einer kraftfahrzeugeigenen Druckluftanlage betätigt wird. Eine erste Druckluftleitung 1 betätigt das Absperrventil der Entnahmeleitung für gasförmigen Wasserstoff und eine zweite Druckluftleitung 2 betätigt das Absperrventil der Entnahmeleitung für kondensierten Wasserstoff.

Zusätzlich wird die Entnahmeeinrichtung über die Entnahmeleitungen auch zum Befüllen des Behälters mit kryogen gespeichertem Kraftstoff benutzt.

In der Nähe des Behälters befindet sich eine Nebensystemkapsel 3, die einen abgeschlossenen Bereich bildet und über eine Spüleinrichtung mit Druckluft aus der kraftfahrzeugeigenen Druckluftanlage verfügt. Dabei werden alternativ von der Druckluftanlage, entweder die abgeschlossenen Bereiche, hier die Nebensystemkapsel 3, gespült oder die Absperrventile betätigt, gesteuert durch eine Druckluftversorgungssteuerung.

Die Druckluftanlage selbst ist Stand der Technik, zum Beispiel bei Fahrzeugen mit druckluftbetätigten Bremsen. Sie besteht im wesentlichen aus einem Kompressor 4 (Schaltplanelemente innerhalb der geschweiften Klammer) und einem Druckluftspeicher 5.

Anforderungen an ein solches pneumatisches Regelsystem sind, einerseits die Absperrventile des Kryotanks zu öffnen beziehungsweise zu schließen, andererseits soll die Nebensystemkapsel 3 mit Luft gespült werden können. Um die Absperrventile des Kryotanks öffnen zu können, muss erst der Druckluftspeicher 5 mit Druckluft durch den Kompressor 4 gefüllt werden. Liegt der festgelegte Betriebsdruck im Druckluftspeicher 5 an, können über die Steuerventile 6, 7 die Absperrventile unabhängig voneinander sowie gemeinsam geöffnet werden. Weiterhin kann durch Öffnen des Steuerventils 8 und durch Anlaufen des Kompressors 4 die Nebensystemkapsel 3 mit Druckluft gespült werden. Grundsätzlich werden dabei zwei Fälle unterschieden:
Fall 1: Sinkt der Luftdruck im Druckluftspeicher 5 unter einen festgelegten Wert, ohne dass ein Wasserstoff-Sensor 9 Wasserstoff in der Nebensystemkapsel 3 meldet, gibt ein Drucksensor 10 ein Signal an ein Steuergerät 11 und der Druckspeicher 5 kann mit Druckluft gefüllt werden.
Fall 2: Meldet der Wasserstoff-Sensor 9 Wasserstoff in der Nebensystemkapsel 3 und liegt gleichzeitig ein Druckabfall im Druckluftspeicher 5 vor, so ist vorrangig die Nebensystemkapsel 3 spülen, bis die Wasserstoff-Konzentration unterhalb eines festgelegten Wertes abgefallen ist. Anschließend ist wiederum der Druckluftspeicher 5 mit Druckluft zu füllen.
Fällt trotz eines Spülvorgangs die Wasserstoff-Konzentration in der Nebensystemkapsel nicht ab, werden ab einer bestimmten Wasserstoff-Konzentration die Absperrventile geschlossen.

Für das Befüllen des Kryotanks werden ebenfalls zwei Fälle unterschieden, abhängig davon, ob der Luftdruck im Druckluftspeicher genügend hoch ist. Ist dies der Fall, müssen, um das Fahrzeug zu betanken, die beiden Absperrventile geöffnet werden. Dafür muss über den Drucksensor 10 festgestellt werden, ob der Luftdruck im Druckluftspeicher 5 ausreicht. Ist der Druck hoch genug, können die Elektromagneten der Steuerventile 6, 7 bestromt werden, so dass diese die Verbindung vom, Druckluftspeicher zu den Absperrventilen öffnen. Dadurch werden die Absperrventile mit Luftdruck beaufschlagt und der eigentliche Betankungsvorgang kann durchgeführt werden. Über weitere Drucksensoren 12, 13 kann kontrolliert werden, ob auf den Druckluftleitungen 1, 2 zu den Absperrventilen tatsächlich Druck anliegt. Um den Befüllvorgang zu beenden, werden die Elektromagneten der Steuerventile 6, 7 stromlos geschaltet, wodurch durch Schließen der Steuerventile 6, 7 die Verbindung zwischen den Absperrventilen und der Nebensystemkapsel 3 geöffnet wird. Somit kann die Druckluft, die die Absperrventile geöffnet hat, entweichen und die Absperrventile schließen sich. Die in die Umgebung (dargestellt durch Pfeil 20) entweichende Druckluft sorgt gleichzeitig ohne zusätzlichen Energiebedarf für die Spülung der Nebensystemkapsel 3 und für eine Reduzierung der Wasserstoff-Konzentration.

Ist jedoch der Luftdruck im Druckluftspeicher 5 nicht genügend hoch, wird vor der Befüllung des Kryotanks über den Drucksensor 10 festgestellt, dass der Luftdruck im System nicht ausreicht, um die Absperrventile zu öffnen. Jetzt muss ausreichender Überdruck über den Kompressor hergestellt werden. Dafür wird über das Steuergerät 11 ein Relais 14 im Kompressor 4 geschaltet, um diesen zu aktivieren. Stellt das Steuergerät 11 über den Drucksensor 10 fest, dass der Luftdruck genügend hoch ist, wird der Kompressor 4 durch das Relais 14 wieder abgeschaltet und der Betankungsvorgang kann durchgeführt werden.

Die selben beiden Fälle werden für das Starten der Brennkraftmaschine unterschieden. Ist der Luftdruck im Druckluftspeicher 5 genügend hoch, muss, um die Brennkraftmaschine zu starten, das Absperrventil der Entnahmeleitung für gasförmigen Wasserstoff geöffnet werden. Dafür wird zuerst über das Steuergerät 11 mittels des Drucksensors 10 festgestellt, ob genügend Luftdruck im Druckluftspeicher 5 vorhanden ist. Ist dies der Fall, steuert das Steuergerät 11 den Elektromagneten des Steuerventils 6 an damit dieses das zugehörige Absperrventil öffnet, wodurch die Entnahmeleitung zwischen Druckbehälter und Brennkraftmaschine geöffnet wird.

Ist der Luftdruck im Druckluftspeicher 5 jedoch nicht hoch genug, stellt das Steuergerät 11 über den Drucksensor 10 fest, dass der zum Start der Brennkraftmaschine notwendige Luftdruck im Druckluftspeicher 5 nicht vorhanden ist und zuerst der Druckluftspeicher 5 befüllt werden muss. Ist dieser Vorgang abgeschlossen kann das Steuergerät 11 das zur Druckluftleitung 1 gehörige Absperrventil über das Steuerventil 6 öffnen.

Für den Spülvorgang der Nebensystemkapsel 3 werden vier Fälle unterschieden, wobei eine Spülung der Nebensystemkapsel 3 bei abgestelltem Kraftfahrzeug von dem Steuergerät 11 grundsätzlich zu verhindern ist.
Fall 1: Die Brennkraftmaschine wird mit Wasserstoff betrieben, der Luftdruck im Druckluftspeicher 5 ist ausreichend.
   Stellt in diesem Fall das Steuergerät 11 während der Fahrt über den Wasserstoff-Sensor 9 einen Wasserstoffaustritt in der Nebensystemkapsel 3 fest, muss diese mit Druckluft gespült werden, um den Wasserstoff -Alarm zu beseitigen. Dazu wird vom Steuergerät 11 das Steuerventil 8 über dessen Elektromagneten geschaltet, um die Verbindung von Nebensystemkapsel 3 und Kompressor 4 zu öffnen. Gleichzeitig wird das Relais 14 angesteuert, so dass der Kompressor anläuft. Jetzt wird die Nebensystemkapsel 3 so lange mit Druckluft gespült, bis die Wasserstoff -Konzentration unterhalb einen bestimmten Wert fällt, welcher durch den Wasserstoff -Sensor 9 gemessen wird. Ist dies der Fall, kann das Steuerventil 8 wieder geschlossen und der Stromkreislauf zum Kompressor 4 durch das Relais 14 wieder unterbrochen werden.
   Fällt trotz eines Spülvorgangs die Wasserstoff-Konzentration in der Nebensystemkapsel 3 nicht ab, wird die Brennkraftmaschine ab einer bestimmten Wasserstoff-Konzentration in der Nebensystemkapsel 3 auf Benzinbetrieb umgeschaltet und die Absperrventile über die Steuerventile 6, 7 geschlossen.
Fall 2: Die Brennkraftmaschine wird mit Wasserstoff betrieben, der Luftdruck im Druckluftspeicher 5 ist nicht ausreichend.
   Wenn während der Fahrt ein Wasserstoffalarm auftritt und gleichzeitig der Luftdruck im System nicht mehr ausreicht um die Absperrventil-Aktuatoren geöffnet zu lassen, ist vorrangig der Wasserstoff in der Nebensystemkapsel 3 zu beseitigen. Dafür wird vom Steuergerät 11 das Steuerventil 8 und das Relais 14 so geschaltet, dass die Nebensystemkapsel 3 gespült wird. Fällt währenddessen der Luftdruck im System so weit ab, dass die Absperrventile nicht mehr offen bleiben können, muss die Brennkraftmaschine auf Benzinbetrieb umgeschaltet werden. Nach dem Spülvorgang erkennt das Steuergerät 11 immer noch den zu niedrigen Luftdruck im System und der Druckluftspeicher 5 kann wieder befüllt werden. Fällt trotz eines Spülvorgangs die Wasserstoff-Konzentration in der Nebensystemkapsel 3 nicht ab, wird die Brennkraftmaschine ab einer bestimmten Wasserstoff-Konzentration in der Nebensystemkapsel 3 auf Benzinbetrieb umgeschaltet.
Fall 3: Die Brennkraftmaschine wird mit Benzin betrieben, der Luftdruck im Druckluftspeicher 5 ist ausreichend.
   Befindet sich die Brennkraftmaschine im Benzinbetrieb, läuft der Spülvorgang entsprechend dem Wasserstoffbetrieb ab, mit dem Unterschied, dass in diesem Fall das Steuerventil 6 und damit auch das Absperrventil für die Entnahme von gasförmigem Wasserstoff geschlossen ist.
Fall 4: Die Brennkraftmaschine wird mit Benzin betrieben, der Luftdruck im Druckluftspeicher 5 ist nicht ausreichend.
   In diesem Fall hat das keinerlei Auswirkung auf den Betrieb des Fahrzeuges. Der Fall ist nur für einen sofortigen Wechsel in den Wasserstoff -Betrieb von Belang. Der Spülvorgang läuft deswegen entsprechend dem bei Wasserstoffbetrieb ab, mit dem Unterschied dass das Steuerventil 6 und damit auch das Absperrventil für die Entnahme von gasförmigem Wasserstoff geschlossen ist. Nach dem Spülvorgang bleibt auch hier der Kompressor 4 in Betrieb und füllt den Druckluftspeicher 5 auf.

Für alle beschriebenen Betriebsfälle gilt, dass ein Unfall vom Steuergerät 11 über einen Crash-Sensor 15 erkannt und daraufhin sofort jedes Steuerventil 6, 7, 8 stromlos geschaltet wird. Dies bedeutet, dass die Steuerventile 6, 7, die Druckluftleitungen 1, 2, so wie in der Figur dargestellt, zur Nebensystemkapsel 3 hin öffnen und die Druckluft aus den Absperrventil-Aktuatoren über die Nebensystemkapsel 3 entweichen kann.

Ebenfalls sind für alle beschriebenen Betriebsfälle Regeneriervorgänge notwendig, um das aus der Druckluft gesammelte Wasser aus einem Entfeuchter 16 wieder an die Umgebung abgeben zu können. Grundsätzlich soll beim Regeneriervorgang der Luftdruck im System nicht unter den Betriebsdruck abfallen, so dass die Absperrventile geöffnet bleiben und der Wasserstoffbetrieb der Brennkraftmaschine sichergestellt ist. Die Anzahl der Regeneriervorgänge ist festzulegen und abhängig von der Größe des Druckluftspeichers 5 und vom festgelegten Arbeitsdruck des Systems. Ferner muss festgelegt werden, wie viele Regeneriervorgänge nach dem Spülen der Nebensystemkapsel 3 nötig sind und nach wie vielen Schaltvorgängen der Absperrventile einer oder mehrere Regeneriervorgänge durchgeführt werden müssen. Dies bedeutet, dass das Steuergerät 11 die Anzahl und die Dauer der Schaltvorgänge des Steuerventils 8 erkennen muss. Weiterhin muss dem Steuergerät 11 die Anzahl der Schaltvorgänge der Steuerventile 6, 7 bekannt sein, um einen Regeneriervorgang über ein weiteres Steuerventil 17 einzuleiten.

Meldet der Wasserstoff -Sensor 9 Wasserstoff in der Nebensystemkapsel 3, so ist vorrangig die Nebensystemkapsel 3 mit Druckluft zu spülen.

## Patentansprüche

1. Kraftfahrzeug mit einem mit kryogen gespeichertem Kraftstoff betreibbaren Verbraucher, insbesondere einer Brennkraftmaschine, und mit einem als Kryotank ausgebildeten Behälter zur Speicherung des Kraftstoffs als kondensiertes Gas, wobei der Behälter eine Entnahmeeinrichtung für den kryogen gespeicherten Kraftstoff besitzt, mindestens bestehend aus einer Entnahmeleitung mit einem Absperrventil, **dadurch gekennzeichnet, dass** das Absperrventil mittels Druckluft betätigt wird.

2. Kraftfahrzeug nach Anspruch 1, **dadurch gekennzeichnet, dass** die Entnahmeeinrichtung mindestens zwei Entnahmeleitungen mit mindestens je einem Absperrventil aufweist, eine erste Entnahmeleitung für die Entnahme von kondensiertem Gas und eine zweite Entnahmeleitung für die Entnahme von Gas.

3. Kraftfahrzeug nach Anspruch 1 oder 2, **dadurch gekennzeichnet, dass** die Entnahmeeinrichtung auch eine Befülleinrichtung für kryogen gespeicherten Kraftstoff ist.

4. Kraftfahrzeug nach einem der Ansprüche 1 bis 3, **dadurch gekennzeichnet, dass** die Druckluft zur Betätigung der Absperrventile mittels einer kraftfahrzeugeigenen Druckluftanlage erzeugt wird.

5. Kraftfahrzeug nach einem der Ansprüche 1 bis 4, **dadurch gekennzeichnet, dass** im oder in der Nähe des Behälters bestimmte abgeschlossene Bereiche ausgebildet sind, insbesondere eine Nebensystemkapsel (3), die über eine Einrichtung zu deren Spülung mit Druckluft verfügen.

6. Kraftfahrzeug nach Anspruch 5, **dadurch gekennzeichnet, dass** die Druckluft zum Spülen der abgeschlossenen Bereiche mittels einer kraftfahrzeugeigenen Druckluftanlage erzeugt wird.

7. Kraftfahrzeug nach einem der Ansprüche 1 bis 6, **dadurch gekennzeichnet, dass** die Druckluftanlage eine Druckluftversorgungssteuerung mit einem Steuergerät (11) besitzt, die alternativ, entweder die abgeschlossenen Bereiche spült oder die Absperrventile betätigt.

## Claims

1. A motor vehicle with a consuming device, which can be operated by a cryogenically stored fuel, more especially an internal combustion engine, and with a container configured as a cryotank for storing the fuel as a condensed gas, wherein the container has a removal device for the cryogenically stored fuel, at least comprising a removal line with a shut-off valve, **characterised in that** the shut-off valve is actuated by means of compressed air.

2. A motor vehicle according to claim 1, **characterised in that** the removal device has at least two removal lines with at least one shut-off valve each, a first removal line to remove condensed gas and a second removal line to remove gas.

3. A motor vehicle according to claim 1 or 2, **characterised in that** the removal device is also a filling device for cryogenically stored fuel.

4. A motor vehicle according to any one of claims 1 to 3, **characterised in that** the compressed air to actuate the shut-off valves is produced by means of a compressed air system particular to the motor vehicle.

5. A motor vehicle according to any one of claims 1 to 4, **characterised in that** closed-off regions determined in or close to the container are formed, more especially a secondary system capsule (3), which have a device for flushing them with compressed air.

6. A motor vehicle according to claim 5, **characterised in that** the compressed air to flush the closed-off regions is produced by means of a compressed air system particular to the motor vehicle.

7. A motor vehicle according to any one of claims 1 to 6, **characterised in that** the compressed air system has a compressed air supply control with a control unit (11), which, alternatively, either flushes the closed-off regions or actuates the shut-off valves.

## Revendications

1. Véhicule automobile équipé d'un utilisateur fonctionnant avec du carburant cryogénique, notamment un moteur thermique et un réservoir sous la forme d'un réservoir cryogénique pour stocker le carburant à l'état de gaz condensé,
le réservoir ayant une installation de prélèvement du carburant stocké à l'état cryogénique, composée au d'une conduite de prélèvement avec une vanne d'arrêt,
véhicule **caractérisé en ce que**
la vanne d'arrêt est commandée par air comprimé.

2. Véhicule automobile selon la revendication 1,
**caractérisé en ce que**
l'installation de prélèvement comporte au moins deux conduites de prélèvement ayant chacune au moins une vanne d'arrêt, une première conduite de prélèvement pour prélever le gaz à l'état condensé et une seconde conduite de prélèvement pour prélever le gaz.

3. Véhicule automobile selon la revendication 1 ou 2,
**caractérisé en ce que**
l'installation de prélèvement est une installation de ventilation du carburant stocké à l'état cryogénique.

4. Véhicule automobile selon l'une des revendications 1 à 3, **caractérisé en ce que**
l'air comprimé pour actionner les vannes d'arrêt est généré par une installation d'air comprimé installée dans le véhicule automobile.

5. Véhicule automobile selon l'une des revendications 1 à 4, **caractérisé en ce que**
des zones fermées sont réalisées dans ou à proximité du réservoir, notamment une capsule de système auxiliaire (3) alimentée en air comprimé par une installation pour en assurer le rinçage.

6. Véhicule automobile selon la revendication 5,
**caractérisé en ce que**
l'air comprimé servant au rinçage des zones fermées, est généré par une installation d'air comprimé équipant le véhicule automobile.

7. Véhicule automobile selon l'une des revendications 1 à 6, **caractérisé en ce que**
l'installation d'air comprimé comporte une commande d'alimentation en air comprimé équipée d'un appareil de commande (11) qui alternativement, rince des zones fermées, ou actionne les vannes d'arrêt.
